(19) Europäisches Patentamt

European Patent Office

Office européen des brevets

(11) **EP 3 043 316 A1**

(12) **EUROPEAN PATENT APPLICATION**

(43) Date of publication:
**13.07.2016 Bulletin 2016/28**

(51) Int Cl.:
***G06T 7/00*** *(2006.01)*

(21) Application number: **15305013.3**

(22) Date of filing: **08.01.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing
92130 Issy-les-Moulineaux (FR)**

(72) Inventors:
• **Gandolph, Dirk
  30952 Ronnenberg (DE)**

• **Putzke-Roeming, Wolfram
  31137 Hildesheim (DE)**
• **Jachalsky, Joern
  30974 Wennigsen (DE)**

(74) Representative: **Huchet, Anne et al
Technicolor
1, rue Jeanne d'Arc
92443 Issy-les-Moulineaux (FR)**

(54) **Method and apparatus for generating superpixels for multi-view images**

(57) A method and an apparatus (20) for generating temporally consistent superpixels for a sequence of multi-view images are described. A sequence generator (23) generates (10) an ordered sequence of views forming a joined path from views of a first multi-view capture and views of a second multi-view capture, wherein the views of the second multi-view capture have an order which is a reverse of an order of the views of the first multi-view capture. A superpixel generator (24) then generates (11) temporally consistent superpixels for the ordered sequence of views.

Fig. 1

**Description**

**FIELD OF THE INVENTION**

The invention relates to a method and apparatus for generating superpixels for multi-view images. In particular, the invention relates to a method and apparatus for generating temporally consistent superpixels for a sequence of multi-view images.

**BACKGROUND OF THE INVENTION**

Image segmentation is a fundamental processing step in computer vision. The aims of segmentation are to simplify the image representation for image analysis and to optimize object adaptive filtering. There exist a wide range of state-of-the-art algorithms for segmentation, including thresholding, edge detection, clustering, and many more.

A newer segmentation algorithm [1] prepares over-segmentation by grouping spatially coherent pixels sharing similar features into so called superpixels. This superpixel approach provides reliable and object-coincident segments. However, it requires large performance improvements until gaining greater popularity. The necessary change was described in [2], where the superpixel algorithm was accelerated with a simple linear iterative clustering method (SLIC).

So far the focus of the segmentation algorithm has been set to still images only. Recent publications, however, considered image sequences requiring temporal consistent segmentation results and proposed an approach for videos by generating temporal consistent superpixels as developed in [3].

The extension from still images to image sequences causes a dimensional increment which is closely related to an additional increase in calculation complexity, and already the superpixel calculation in [3] took appropriate measures to curb the growing calculation amount when analyzing hybrid feature subspaces.

The next important step to be taken for the segmentation in image processing technology is to proceed to algorithms segmenting temporal multi-view sequences. Recent application examples of such temporal multi-view sequences are stereoscopic 3D movies and Light-field cameras. This step towards multi-view sequences again increases the processing expenses. While a stereoscopic sequence merely doubles the number of images, a Light-field camera generates multiple images in every time instance.

Furthermore, today the calculation of superpixels, which are required to be temporally and view consistent, is not yet solved and imposes substantial demands on algorithm stability and processing power.

**SUMMARY OF THE INVENTION**

It is an object of the present invention to propose an improved solution for generating temporally consistent superpixels for a sequence of multi-view captures.

According to the invention, a method for generating temporally consistent superpixels for a sequence of multi-view captures, each multi-view capture including at least two views comprises:

- generating an ordered sequence of views forming a joined path from views of a first multi-view capture and views of a second multi-view capture, wherein the views of the second multi-view capture have an order that is a reverse of an order of the views of the first multi-view capture; and
- generating temporally consistent superpixels for the ordered sequence of views.

Accordingly, a computer readable storage medium has stored therein instructions enabling generating temporally consistent superpixels for a sequence of multi-view captures, each multi-view capture including at least two views, wherein the instructions, when executed by a computer, cause the computer to:

- generate an ordered sequence of views forming a joined path from views of a first multi-view capture and views of a second multi-view capture, wherein the views of the second multi-view capture have an order that is a reverse of an order of the views of the first multi-view capture; and
- generate temporally consistent superpixels for the ordered sequence of views.

Also, in one embodiment an apparatus configured to generate temporally consistent superpixels for a sequence of multi-view captures, each multi-view capture including at least two views, comprises:

- a sequence generator configured to generate an ordered sequence of views forming a joined path from views of a first multi-view capture and views of a second multi-view capture, wherein the views of the second multi-view capture have an order is a reverse of an order of the views of the first multi-view capture; and

- a superpixel generator configured to generate temporally consistent superpixels for the ordered sequence of views.

In another embodiment, an apparatus configured to generate temporally consistent superpixels for a sequence of multi-view captures, each multi-view capture including at least two views, comprises a processing device and a memory device having stored therein instructions, which, when executed by the processing device, cause the apparatus to:

- generate an ordered sequence of views forming a joined path from views of a first multi-view capture and views of a second multi-view capture, wherein the views of the second multi-view capture have an order which is a reverse of an order of the views of the first multi-view capture; and
- generate temporally consistent superpixels for the ordered sequence of views.

Superpixels represent a reliable and object coincident segmentation developed for still images and image sequences. While the expansion from still images to image sequences did already reveal the difficulty to handle the growing calculation amount, the switch to temporally consistent multi-view segmentation is much more complex. The proposed solution provides temporally and view consistent superpixel generation by reducing the growing processing amount in one dimension by incorporating a priori knowledge for the superpixel generation. For this purpose a serialization of the views of the first multi-view capture and a temporally successive second multi-view capture is performed. An algorithm for generating temporally consistent superpixels is then applied to the serialized views.

In one embodiment, labels of superpixels generated for a view of the second multi-view capture are refined using superpixels generated for a corresponding view of the first multi-view capture. In another embodiment, labels of superpixels generated for a view of the second multi-view capture are refined using superpixels generated for a neighboring view of the second multi-view capture. In both embodiments an a posteriori correction is applied to the superpixel labels, which makes use of superpixels generated for a previously processed view to improve the superpixels for a more recently processed view. For example, the correction makes use of a geometrical measure or a similarity measure, such as color information, depth information, and motion vectors, for refining superpixels labels.

## BRIEF DESCRIPTION OF THE DRAWINGS

Fig. 1        schematically illustrates one embodiment of a method for generating temporally consistent superpixels for a sequence of multi-view captures;

Fig. 2        schematically depicts a first embodiment of an apparatus configured to perform a method according to Fig. 1;

Fig. 3        schematically shows a second embodiment of an apparatus configured to perform a method according to Fig. 2;

Fig. 4        shows examples of image sequences obtained with a single image sensor and with a multi-view image sensor or multiple image sensors;

Fig. 5        depicts a general scheme to generate temporally consistent superpixels;

Fig. 6        sketches the problem arising with the increase of image inputs in a scheme to generate temporally and also multi-view consistent superpixels;

Fig. 7        illustrates the increase in the degree of freedom caused by the introduction of multi-view images;

Fig. 8        shows one approach for serialization of multi-view images;

Fig. 9        shows simplified block diagrams of three implementations of temporally and multi-view consistent superpixel generation;

Figs. 10-11    depict an underlying processing scheme of the implementation shown in Fig. 9(b);

Figs. 12-19    illustrate an underlying processing scheme of the implementation shown in Fig. 9(c);

Fig. 20            depicts a detail of a superpixel map;

Fig. 21            shows details of two different superpixel maps;

Fig. 22            illustrates determination of correspondences in two different superpixel maps;

Fig. 23            illustrates an example of processing a static scene across two time instances;

Figs. 24-25      show intermediate superpixels generated after serialization of different views for the two time instances;

Figs. 26-28      depict the intermediate superpixel maps shown in Fig. 24-25 for a direct comparison of coincident views in both time instances;

Fig. 29            illustrates an example of processing a dynamic scene across two time instances;

Figs. 30-31      show intermediate superpixels generated after serialization of different views for the two time instances;

Figs. 32-34      depict the intermediate superpixel maps shown in Fig. 30-31 for a direct comparison of coincident views in both time instances.

## DETAILED DESCRIPTION OF PREFERRED EMBODIMENTS

For a better understanding, the invention shall now be explained in more detail with reference to the figures. It is understood that the invention is not limited to these exemplary embodiments and that specified features can also expediently be combined and/or modified without departing from the scope of the present invention as defined in the appended claims.

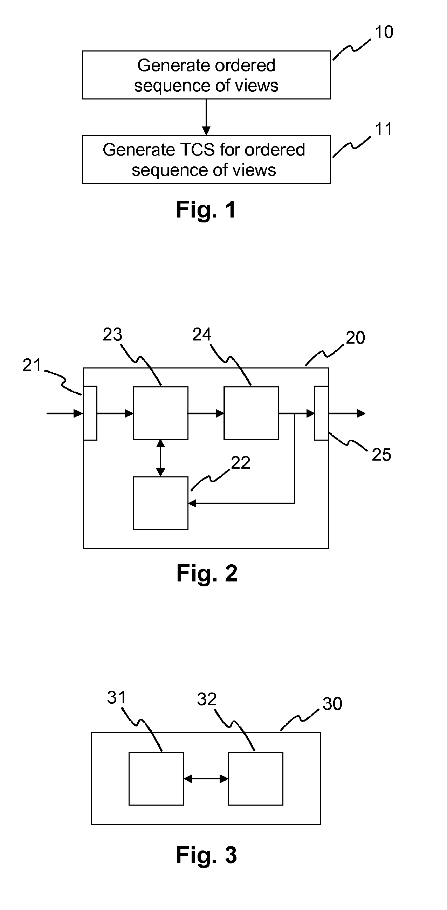

Fig. 1 schematically illustrates one embodiment of a method for generating temporally consistent superpixels for a sequence of multi-view captures. In a first step an ordered sequence of views forming a joined path is generated 10 from views of a first multi-view capture and views of a second multi-view capture, wherein the views of the second multi-view capture have an order which is a reverse of an order of the views of the first multi-view capture. In a second step temporally consistent superpixels are generated 11 for the ordered sequence of views.

One embodiment of an apparatus 20 configured to perform the method according to the invention is schematically depicted in Fig. 2. The apparatus 20 has an input 21 for receiving a sequence of multi-view captures, e.g. from a network or an external storage system. Alternatively, the sequence of multi-view captures is retrieved from a local storage unit 22. A sequence generator 23 generates 10 an ordered sequence of views forming a joined path from views of a first multi-view capture and views of a second multi-view capture, wherein the views of the second multi-view capture have an order which is a reverse of an order of the views of the first multi-view capture. A superpixel generator 24 then generates 11 temporally consistent superpixels for the ordered sequence of views. The resulting temporally consistent superpixels are preferably made available via an output 25. The superpixels may also be stored on the local storage unit 22. The output 25 may also be combined with the input 21 into a single bidirectional interface. Of course, the different units 23, 24, may likewise be fully or partially combined into a single unit or implemented as software running on a processor.

Another embodiment of an apparatus 30 configured to perform the method according to the invention is schematically illustrated in Fig. 3. The apparatus 30 comprises a processing device 31 and a memory device 32 storing instructions which, when executed, cause the apparatus to perform steps according to one of the described methods.

For example, the processing device 31 can be a processor adapted to perform the steps according to one of the described methods. In an embodiment said adaptation comprises that the processor is configured, e.g. programmed, to perform steps according to one of the described methods.

A processor as used herein may include one or more processing units, such as microprocessors, digital signal processors, or combination thereof.

The local storage unit 22 and the memory device 32 may include volatile and/or non-volatile memory regions and storage devices such hard disk drives, DVD drives. A part of the memory is a non-transitory program storage device readable by the processing device 31, tangibly embodying a program of instructions executable by the processing device 31 to perform program steps as described herein according to the principles of the proposed solution.

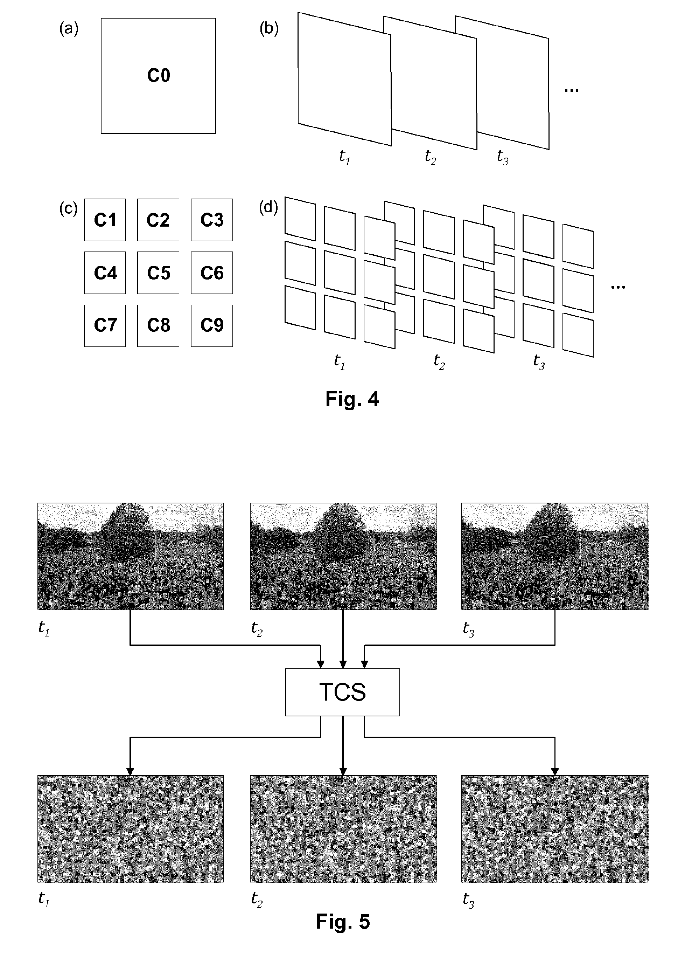

In the following the proposed approach shall be described in more detail. In [3] a temporally consistent superpixel algorithm has been developed, which is applicable to image sequences like a movie for example. An example of an image sequence is depicted in Fig. 4. Sub-picture (a) and (b) show a single image sensor C0, which generates image frames for distinct time instances $t_i$. As shown in sub-pictures (c) and (d), if the single image sensor is substituted with a multi-view sensor or when the number of simultaneous capturing cameras is increased, multiple images are provided at each distinct time instance $t_i$.

A general scheme to generate temporally consistent superpixels (TCS) is depicted in Fig. 5. The superpixel algorithm in the scheme is not restricted to a single solution. For example, the method described in [3] or any other appropriate approach can be used. The block diagram shows that subsequent frames are required to generate the temporally consistent superpixels. The temporally consistent superpixels are characterized by a consistent labeling of superpixels, which means that slight changes between consecutive frames do not prevent the usage of locally persistent superpixel IDs. Superpixels located in the same image region, which are slightly moving or changing in shape, are constantly labeled with the same superpixel ID. This allows to track superpixels over time and thus to identify scene objects.

The generation of temporally consistent superpixels becomes more complex if the single image sensor is substituted with a multi-view sensor or when the number of simultaneous capturing cameras is increased. The case of a stereo image sequence is included in the example shown in Fig. 4(c) and (d) by limiting the number of image sensors to two, e.g. C4 and C6 instead of the depicted nine sensors C1...C9. In general, the number of views is arbitrary and any number larger 1 can be chosen. The term "view" is interchangeable with the term "sensor", however, as the following description covers multiple cameras as well as light field cameras.

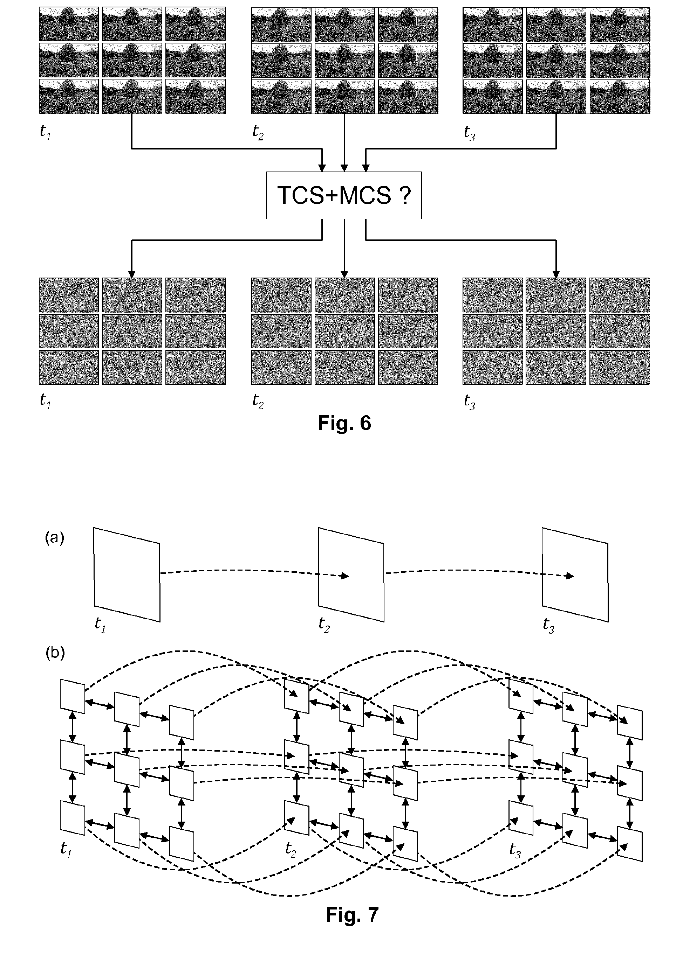

Fig. 6 sketches the problem arising with the increase of image inputs in a scheme to generate temporally (TCS) and also multi-view (MCS) consistent superpixels. Here subsequent multi-view images are the input and the superpixel generation has to take the spatial (multi-view) as well as temporal (sequential) consistency into account. This, however, increases the degree of freedom that has to be handled by the new segmentation task. The output desired in Fig. 6 is a sequence of temporally and multi-view consistent superpixels.

The increase in the degree of freedom caused by the introduction of multi-view images is illustrated in Fig. 7, which compares the single view sequence shown in Fig. 7(a) to the multi-view sequence shown in Fig. 7(b). The depicted double arrows indicate the demand for consistency in labeling superpixels. This means that the superpixels generated within the images linked by the arrows should be traceable via their IDs when covering the same scene areas looked at in different views and/or different time instances. The double arrows are separated into two categories. The first category are temporal superpixels (TSP), i.e. superpixels belonging to the coincident multi-views of different time instances, and the second category are simultaneous multi-view superpixels (MSP), i.e. superpixels belonging to different views of the same time instance. The TSP relations are marked by dashed arrows, whereas the MSP relations are marked by solid arrows. It should be noted that the number of MSP and TSP relations is a subset of the theoretical possible by incorporating the orthogonal (rectangular) neighbors only and neglecting any diagonal neighbors. This is justified by the spatial distance between the images. The relations included in Fig. 7 are only those joining directly adjacent images, which are similar to those with minimal distances. The excluded, non-orthogonal neighbors are always further away. This, however, does not impede the superpixel ID tracking across non-orthogonal neighbors.

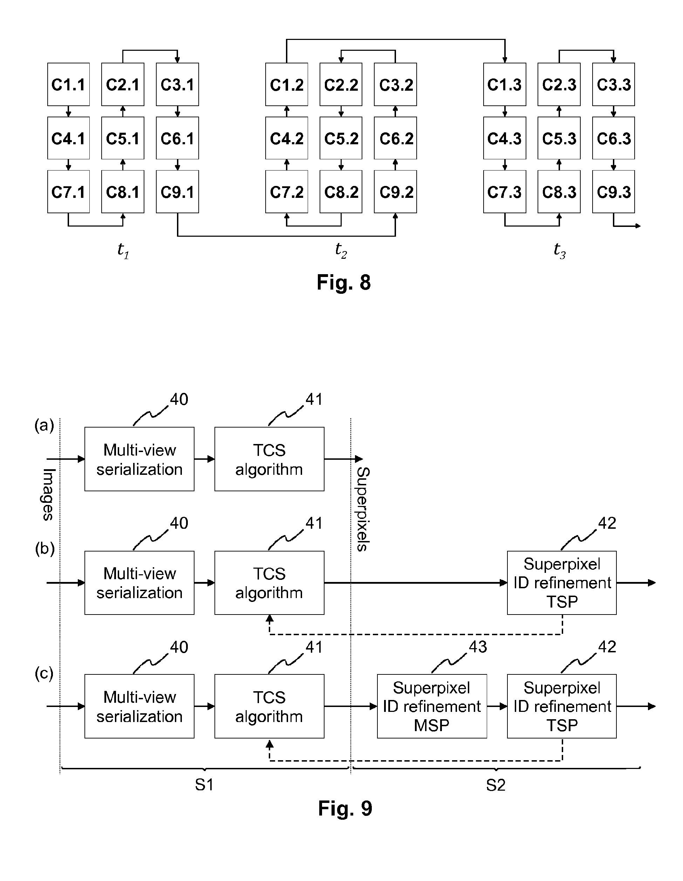

In order to cope with the increased degree of freedom, a serialization is applied to the multi-view images. In the following the serialization is described exemplarily with reference to three by three multi-view images. The solution can be generalized for arbitrary arrangements of multi-view images, including stereo vision. Fig. 8 depicts three time instances $t_1$, $t_2$, and $t_3$. Larger image sequences are treated accordingly by continuing the depicted serialization scheme.

The serialization scan in the depicted example starts with the view C1.1. The number before the dot indicates the view location C1 and the number following the dot indicates the time instance $t_1$. In the example the serialization scan runs from C1.1 vertically down to C4.1 and C7.1, always connecting nearest neighbor views. Then the scan turns right to C8.1 before going upward to C5.1 and C2.1. The serialization run continues turning right to C3.1 and down to C6.1 and C9.1. This scheme is only an example. Of course, other serialization orders are possible for connecting all views within one time instance with minimal distances between the direct neighbors.

After scanning all views belonging to $t_1$ the serialization turns to the views belonging to the next time instance $t_2$ by proceeding to the view with the minimal distance, which always is the coincident view. In Fig. 8 this is C9.2. In other words, the multi-scan serialization links coincident views for adjacent time instances.

For the scanning within the following time instance it is advantageous to use the reverse ordered scan as before to reach the best consistency between the views and to not mix different scanning orders. In the example of Fig. 8 the scan becomes C9.2, C6.2, C3.2, C2.2, C5.2, C8.2, C7.2, C4.2, and C1.2. The third time instance $t_3$ is again treated similar to the time instance $t_1$, i.e. the scan order is reversed once more. More generally, any further time instance $t_k$ will be treated as the previous time instance $t_{k-2}$.

Preferably, the scanning order of all following time instances (2nd and higher) is the reverse ordered scan of the time instance before. Otherwise the views would be reordered differently in subsequent time instances and cause the increase of temporal discrepancies in the generated superpixels. This might lead to losses in the temporal consistency.

In the following three implementations of the proposed solution for generating temporally and multi-view consistent superpixels shall be described in greater detail. All three implementations improve the superpixel consistency. Fig. 9 shows simplified block diagrams of the three implementations. All have in common a multi-view serialization block 40 executing a serialization scan and a TCS block 41 for generating temporally consistent superpixels.

The serialization scheme depicted in Fig. 8 already represents the simplest solution for generating temporally and multi-view consistent superpixels, which is depicted in Fig. 9(a). This solution provides consistent superpixel labeling for static scene regions not being affected by object occlusions. This is the case if the scene objects in the image have a sufficiently large distance from the camera. The serialized multi-view images are simply processed by the TCS block 41 without any further processing step to generate close to temporal and multi-view consistent superpixels. Superpixel consistency cannot be guaranteed in case of objects located close to the camera. However, the additional processing amount is minimal.

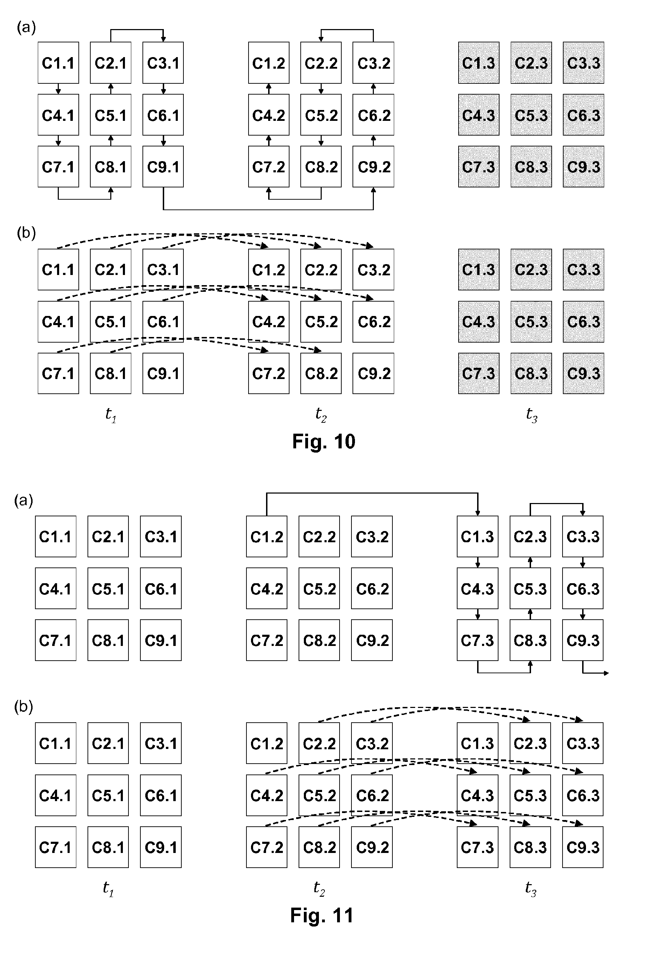

The superpixel consistency can be improved by the solution shown in Fig. 9(b), which incorporates a temporal superpixel refinement block 42. The underlying processing scheme is depicted in Fig. 10 and Fig. 11. Both figures are divided into sub-pictures (a) and (b), depicting different processing steps. The sub-pictures labeled (a) show a serialization scheme, which is part of the first step S1 in Fig. 9 performing the multi-view serialization and is followed by the TCS algorithm to generate intermediate superpixel IDs, whereas the sub-pictures labeled (b) show a post processing step S2 executed for a superpixel label refinement. The post processing step S2, which will be explained in details later, serves to dispel unintentionally created superpixel label IDs and to reduce them to the minimum necessary for generating temporally and multi-view consistent superpixels. The superpixel shapes are kept, however. This second solution is better suited to treat dynamic scenes and object occlusions.

As depicted in Fig. 10 and Fig. 11, the step S1 is applied alternating with the post processing step S2. The serialization of multi-view images in the refined solution is the same as the one shown in Fig. 8, but it is intersected by the ID refinement step S2. After the generation of the intermediate temporally consistent superpixels in the time instances $t_1$ and $t_2$ shown in Fig. 10(a), the ID refinement S2 ensures temporal consistency by analyzing the images of coincident views, as indicated by the dashed arrows in Fig. 10(b). The images of coincident views already treated within the first step S1 do not need to be handled a second time and can be skipped. In Fig. 10(b) this is the case for C9.1 and C9.2. The ID refinement S2 may change one or more of the superpixel label IDs in the time instance $t_2$. The resulting label IDs are then used in the next processing steps shown in Fig. 11. Here the first step S1 shown in Fig. 11(a) consists in continuing the view serialization and processing of the previously refined superpixel IDs to generate the intermediate superpixels for the time instance $t_3$ by applying the TCS algorithm. Then a further ID refinement step S2 follows, as depicted in Fig. 11(b), ensuring the temporal consistency between coincident views by reducing unintentionally created superpixel label IDs. Any further time instance $t_k$ will be treated in the same way as the time instance $t_{k-2}$.

The above described refined solution of Fig. 9(b) provides an improved superpixel consistency and higher robustness. In addition, it is capable of handling dynamic scenes containing moving objects that are closer to the camera and thus may contain occlusions in the multi-views. At the same time it requires only a slightly increased processing power.

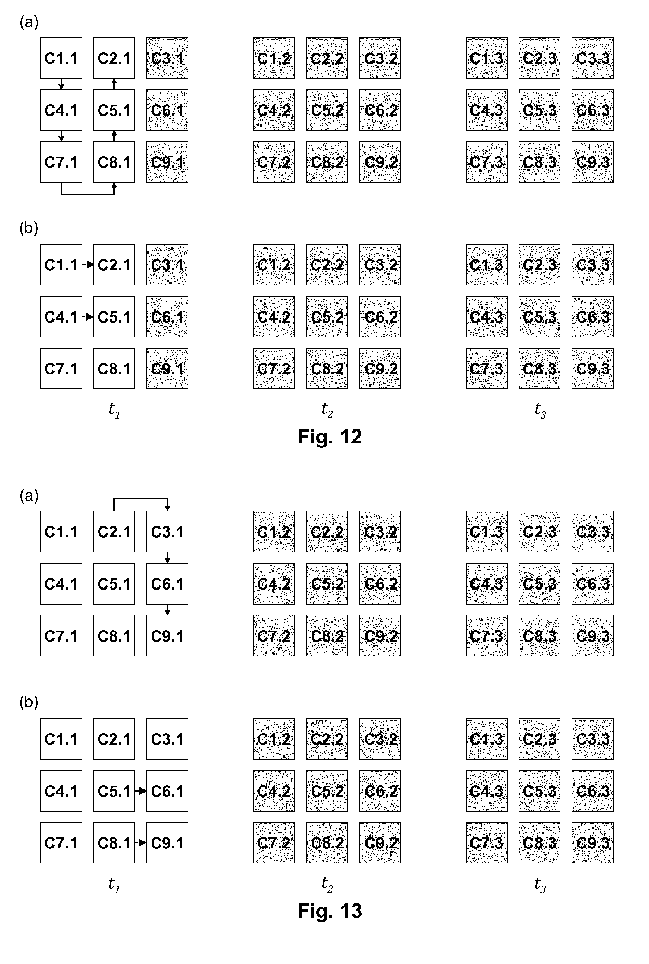

A further improved solution, depicted in Fig. 9(c), shall be explained in the following with reference to Fig. 12 to 19. This approach further extends the solution of Fig. 9(b) by adding a second ID refinement, which is applied within ID refinement step S2. While one of the ID refinement steps executed by a superpixel refinement block 43 treats MSP relations, the other ID refinement step executed by the superpixel refinement block 42 handles the TSP relations. Doubling the ID refinement process results in a further improvement of the superpixel label consistency, but also requires a higher intersection between the first step S1 and the post processing step S2.

The processing steps of this approach start as depicted in Fig. 12, where a first part of the views at the time instance $t_1$ is serialized in step S1, as shown in Fig. 12(a), to apply the TCS algorithm. Then an ID refinement step is performed for MSP relations, as depicted in Fig. 12(b). A TSP refinement is not needed as the handled images belong to the same time instance. The refined superpixel IDs are used to proceed with Fig. 13(a), where the serialized views are processed with TCS and the intermediate IDs are refined for MSP relation in step S2 in Fig. 13(b) to complete the processing of the time instance $t_1$. The ID refinements for the MSP relations C7.1 to C8.1 and C2.1 to C3.1 are redundant and are therefore skipped.

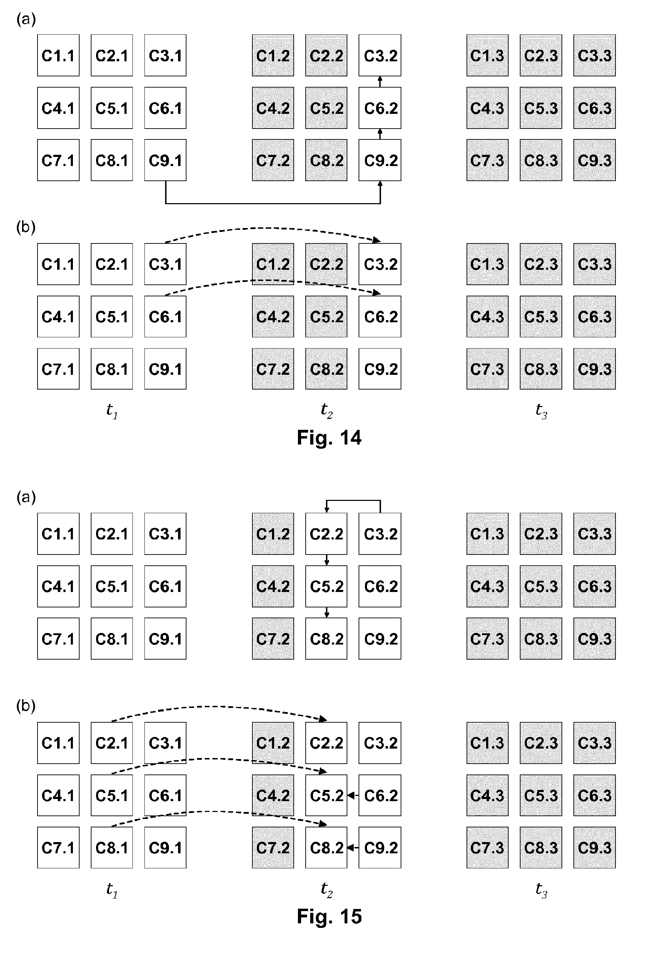

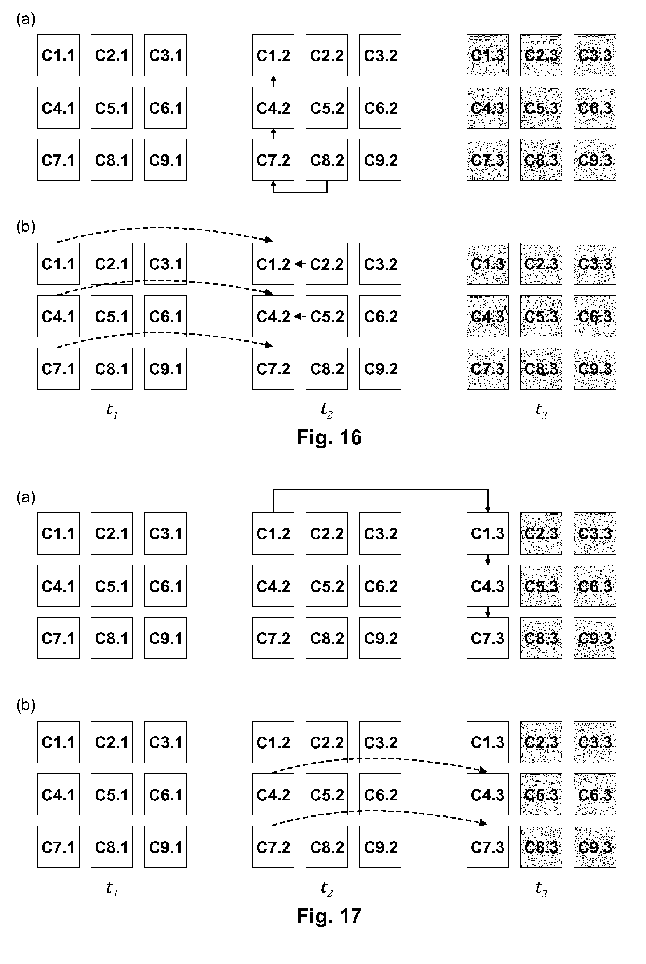

The processing of the time instance $t_2$ consists of three intersections, starting in Fig. 14(a), where the serialized views C9.2, C6.2, and C3.2 are processed using the TCS algorithm. The ID refinement regarding TSP relations is done in the second step S2 as indicated by the dashed arrows in Fig. 14(b). The redundant refinement for the TCS relation C9.1 to C9.2 is skipped. The second intersection depicted in Fig. 15(a) applies the TCS algorithm to C2.2, C5.2, and C8.2, followed by the MSP related ID refinement from C6.2 to C5.2 and C9.2 to C8.2 and the TSP related ID refinement using the coincident views from the time instance $t_1$, as depicted in Fig. 15(b). As shown in Fig. 16(a), the third intersection handles the rest of the views in $t_2$, i.e. C7.2, C4.2, and C1.2 using the TCS. The ID refinement is again the cascade of refinement regarding the MSP relations and the TSP relations, as depicted in Fig. 16(b). The MSP relation of C8.2 to C7.2 is redundant and skipped. This completes the time instance $t_2$.

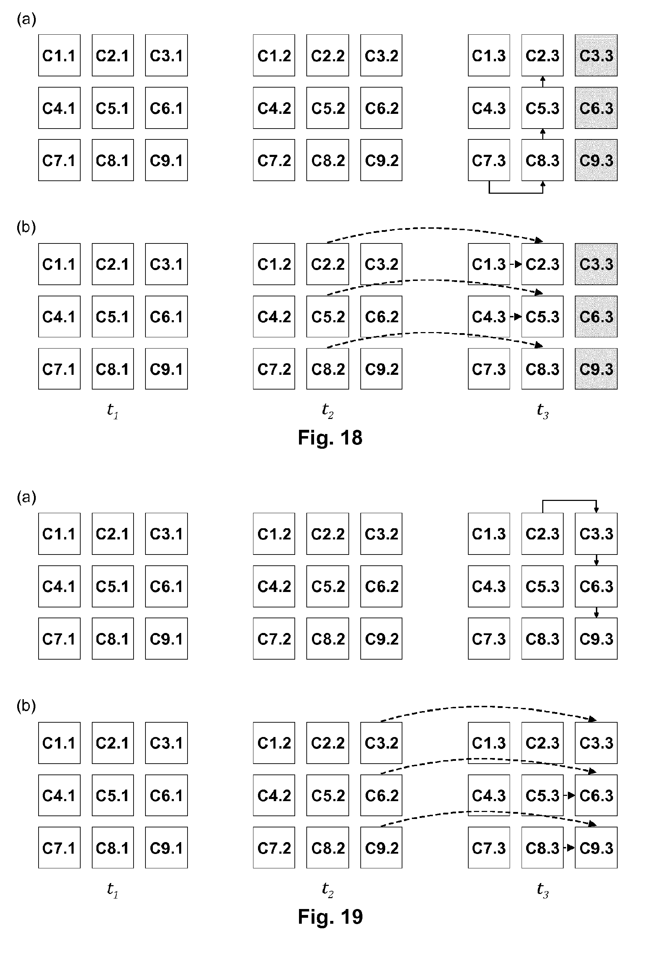

Also the time instance $t_3$ has three intersections, starting with the application of the TCS algorithm to C1.3, C4.3, and C7.3 in Fig. 17(a). Then the ID refinements regarding TSP relations are performed as illustrated by the dashed arrows in Fig. 17(b), excluding C1.3. Fig. 18(a) depicts the second intersection, where the TCS algorithm is applied to C8.3, C5.3, and C2.3, again using the previously generated superpixel refinements. Fig. 18(b) shows the two ID refinements considering MSP relations, excluding the redundant C7.3 to C8.3 relation, followed by considering the TSP relations joining the coincident views. The last intersection completing the time instance $t_3$ is shown in Fig. 19, where in sub-picture (a) the views C3.3, C6.3, and C9.3 are processed using the TCS algorithm and in sub-picture (b) the ID refinements regarding the MSP relations C5.3 to C6.3 and C8.3 to C9.3 are processed, followed by the coincident view ID refinements for the three TSP relations C3.2 to C3.3, C6.3 to C6.3, and C9.2 to C9.3. This completes the processing required for the first three time instances. Any further time instance $t_k$ will be treated in the same way as the time instance $t_{k-2}$.

The above described solution provides the highest quality in temporally and multi-view consistent superpixel generation. At the same time it circumvents the polynomial processing increase required for conventional solutions.

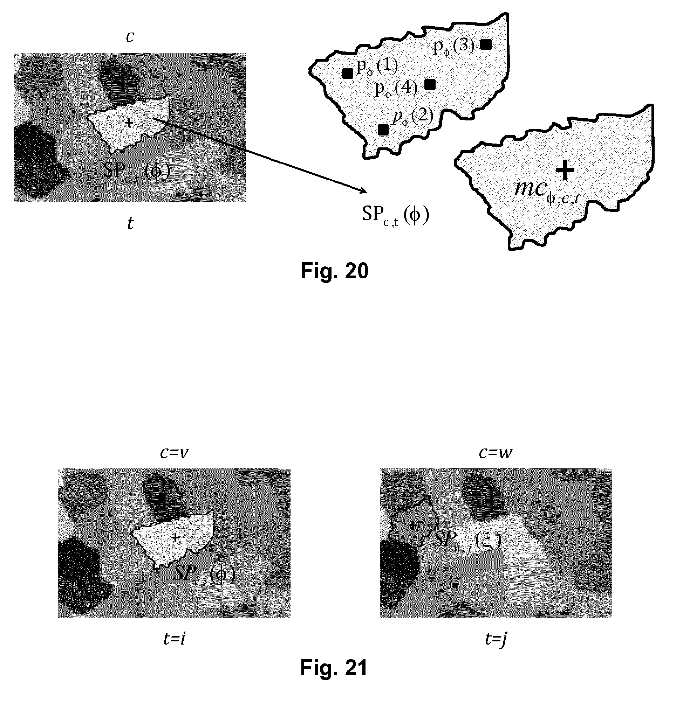

The ID refinement is not necessarily applied to all superpixels within a view and requires some definitions to be formulated correctly. Fig. 20 depicts a detail of a superpixel map, where each superpixel ID has a different grey value. The map determines for each pixel a membership to one superpixel. The superpixel map belongs to the view c and the time instance $t$. It contains $\Phi$ superpixels distinguished by their ID and forming the set of superpixels $SPS(c, t)$ :

$$SPS(c,t): \left\{ SP_{c,t}(1), \dots SP_{c,t}(\phi), \dots SP_{c,t}(\Phi) \right\}.$$

Each superpixel is a set of pixels according to

$$SP_{c,t}(\phi): \left\{ p_{\phi,c,t}(1), \dots p_{\phi,c,t}(n), \dots p_{\phi,c,t}(N) \right\}$$

containing $N$ pixels with the coordinates

$$p_{\phi,c,t}(n) = \left[ x_{\phi,c,t}(n), y_{\phi,c,t}(n) \right]$$

and has a mass center $mc_{c,t}(\Phi)$

$$mc_{c,t}(\phi) = \left[ X_{c,t}(\phi), Y_{c,t}(\phi) \right] = \frac{1}{N} \left[ \sum_N x_{\phi,c,t}(n), \sum_N y_{\phi,c,t}(n) \right].$$

Fig. 21 generalizes the previous formulas by showing details of two different superpixel maps. The first set of superpixels $SPS(v,i)$ belongs to the view $v$ and the time instance $i$ and the second set of superpixels $SPS(w,j)$ belongs to the view $w$ and the time instance $j$. Within both superpixel maps a single superpixel is marked. These two are

$$SP_{v,i}(\phi): \left\{ p_{\phi,v,i}(1), \dots p_{\phi,v,i}(n), \dots p_{\phi,v,i}(N) \right\}$$
$$p_{\phi,v,i}(n) = \left[ x_{\phi,v,i}(n), y_{\phi,v,i}(n) \right]$$
$$mc_{v,i}(\phi) = \left[ X_{v,i}(\phi), Y_{v,i}(\phi) \right]$$

and

$$SP_{w,j}(\xi): \left\{ p_{\xi,w,j}(1), \dots p_{\xi,w,j}(m), \dots p_{\xi,w,j}(M) \right\}$$
$$p_{\phi,v,i}(n) = \left[ x_{\xi,w,j}(m), y_{\xi,w,j}(m) \right]$$
$$mc_{w,j}(\xi) = \left[ X_{w,j}(\xi), Y_{w,j}(\xi) \right]$$

The ID refinement applied in step S2 of the solutions in Fig. 9(b) and (c) between two views with the superpixel maps $SPS(v,i)$ and $SPS(w,j)$ analyzes the superpixel IDs of both views. First those superpixel IDs existing in both SPS sets are excluded, which yields the sub-sets

$$SPS^*(v,i) = SPS_{\text{ID missing in } (w,j)}(v,i)$$

and

$$SPS^*(w,j) = SPS_{\text{ID missing in } (v,i)}(w,j).$$

Thereafter the solution takes the remaining superpixels *SPS\*(v,i)* whose ID disappeared and searches for their whereabouts in the superpixel sub-set *SPS\*(w,j)* holding all unmatched IDs.

When having found a correspondence for the *SPS\*(v,i)* member $SP_{v,i}(\phi)$ within the candidates *SPS\*(w,j)*, which is the superpixel $SP_{w,j}(\xi_\phi)$, the superpixel ID of $SP_{w,j}(\xi_\phi)$ is substituted by the superpixel ID of $SP_{v,i}(\phi)$ to preserve the consistency. The index $\xi_\phi$ indicates the correspondence $\phi \to \xi_\phi$. In addition, the ID re-labeling causes that the set of candidates *SPS\*(w,j)* is reduced by removing $SP_{w,j}(\xi_\phi)$.

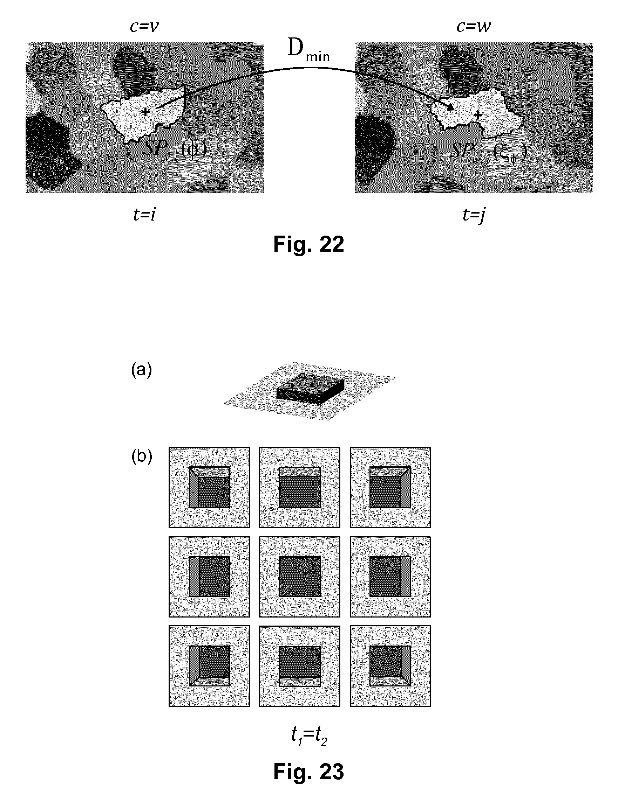

Fig. 22 shows how the correspondences are determined. To find the correspondences for the *SPS\*(v,i)* member superpixel $SP_{v,i}(\phi)$ from the candidates of *SPS\*(w,j)*, the geometrical distance *D* is calculated according to

$$D\left(mc_{v,i}(\phi), mc_{w,j}(\xi)\right) = \sqrt{\left(X_{v,i}(\phi) - X_{w,j}(\xi)\right)^2 + \left(Y_{v,i}(\phi) - Y_{w,j}(\xi)\right)^2} \quad (1)$$

and the correspondence function is determined according to

$$F_{v,i \to w,j}: SP_{v,i}(\phi) \to SP_{w,j}\left(\xi_\phi\right)$$
$$\xi_\phi = F_{v,i \to w,j}(\phi) = \left\{\xi \,\middle|\, \min_{SPS^*(w,j)} D\left(mc_{v,i}(\phi), mc_{w,j}(\xi)\right)\right\}. \quad (2)$$

In other words, for the superpixel $SP_{v,i}(\phi)$ the distances *D* is calculated between $SP_{v,i}(\phi)$ and all members of the sub-set *SPS\*(w,j)*, which are unmatched superpixels taken from $SP_{w,j}(\xi)$. The minimum distance *D* found determines the corresponding superpixel index $\xi_\phi$. This is the superpixel with the spatially closest mass center.

For physical reasons the geometrical distance *D* should not exceed a limit determined by the scene inherent motion and the sizes of multi-view baselines. Therefore, a corresponding superpixel $SP_{w,j}(\xi_\phi)$, which exceeds the maximum allowed geometrical distance

$$D_{\max} = s \cdot \sqrt{\frac{4\pi}{N}}, \quad (3)$$

is rejected. The variable *D* is the pixel count of $SP_{v,i}(\phi)$, the square root determines the virtual superpixel diameter, and the variable s is the maximum displacement or motion expected. Preferably, the value of s is controlled by the results gained from the motion estimation within the TCS algorithm. The local motion vector estimated for the superpixel $SP_{v,i}(\phi)$ can be used to extend the maximum allowed geometrical distance.

A second solution for adapting the search area to the motion present in the scene is to modify the calculation for the geometrical distance *D* of equation (1) by shifting the superpixel mass center by the local motion according to

$$D\left(mc_{v,i}(\phi), mc_{w,j}(\xi), flow_{v,i}(\phi)\right)$$
$$= \sqrt{\left(X_{v,i}(\phi) + Fx_{v,i}(\phi) - X_{w,j}(\xi)\right)^2 + \left(Y_{v,i}(\phi) + Fy_{v,i}(\phi) - Y_{w,j}(\xi)\right)^2}, \quad (4)$$

where *flow*$_{v,i}(\phi)$ describes the dominant motion vector (optical flow) for $SP_{v,i}(\phi)$:

$$flow_{v,i}(\phi) = \left[ Fx_{v,i}(\phi), Fy_{v,i}(\phi) \right]. \quad (5)$$

A third advantageous solution for the correspondence function Eq. 2 is to determine the overlapping areas to search for the corresponding superpixels and to select the match with the largest amount of overlapping area. The overlapping area is determined by the cut-set cardinality

$$\left| SP_{v,i}(\phi) \cap SP_{w,j}(\xi) \right| \quad (6)$$

so that the modified correspondence function becomes

$$F_{v,i \to w,j} : SP_{v,i}(\phi) \to SP_{w,j}(\xi_\phi)$$
$$\xi_\phi = F_{v,i \to w,j}(\phi) = \left\{ \xi \, \Big| \, \max_{SPS^*(w,j)} \left| SP_{v,i}(\phi) \cap SP_{w,j}(\xi) \right| \right\}. \quad (7)$$

Equation (7) covers all superpixels $SPS^*(w,j)$, but is applied only if any of the cut-set cardinalities according equation (6) becomes larger than zero. If this is not the case, equation (2) is taken instead.

While the three previous solutions for the superpixel ID refinement use only geometrical measures, it is also possible to analyze the similarities between superpixels by means of other, non-geometrical features, or even a plurality of them if they are available. Features are characterizing the properties of superpixels and are expressed by the color information, the depth information, the motion vectors, and others. Each of the feature characteristics will have specific similarity measures to provide feasible assessments.

The color information feature for superpixels can be represented by histograms. There are various measures for histogram distances [4] [5]. Example are the Chi-square distance

$$D_{\text{chi-square}}\left(h_{\phi,v,i}, h_{\xi,w,j}\right) = \sum_z \frac{\left(h_{\phi,v,i}(z) - h_{\xi,w,j}(z)\right)^2}{h_{\phi,v,i}(z) + h_{\xi,w,j}(z)} \quad (8)$$

or the earth mover distance as described in [5]. The histograms $h_{\phi,v,i}$ and $h_{\xi,w,j}$ in equation (8) and [5] belong to the superpixels $SP_{vi}(\phi)$ and $SP_{wj}(\xi)$ with normalized cardinalities, i.e. both histograms have the same number of intervals.

Also the depth information feature requires a suitable distance measure, such as the normalized mean difference of disparity according to

$$D_{\text{depth}}\left(\bar{d}_{\phi,v,i}, \bar{d}_{\xi,w,j}\right) = \begin{cases} 0 & ; \left| \max\left(\bar{d}_{\phi,v,i}, \bar{d}_{\xi,w,j}\right) \right| < \varepsilon \\ \dfrac{\left| \bar{d}_{\phi,v,i} - \bar{d}_{\xi,w,j} \right|}{\left| \max\left(\bar{d}_{\phi,v,i}, \bar{d}_{\xi,w,j}\right) \right|} & \text{else} \end{cases} \quad . \quad (9)$$

The incorporation of depth information dispels possible ambiguities within the color information. The threshold of $\xi$ is typically set to 1 pixel for equation (9) and needs to be adapted to eliminate the noise present in the depth information. The depth means $\bar{d}_{\phi,v,i}$ and $\bar{d}_{\xi,w,j}$ represent the depth values for the two superpixels $SP_{v,i}(\phi)$ and $SP_{w,j}(\xi)$.

The distance measures defined in equation (8) and equation (9) are used for discrimination and substitute the distance $D$ in equation (2) if applied individually for one feature. Preferable, however, is to combine more than one feature into more reliable evidence. This can be reached, for example, either by a Euclidean combination or by a majority vote.

The Euclidean combination searches for a minimum in equation (2) with

$$F_{v,i \to w,j} : SP_{v,i}(\phi) \to SP_{w,j}(\xi_\phi)$$
$$\xi_\phi = F_{v,i \to w,j}(\phi) = \left\{ \xi \, \Big| \, \min_{SPS^*(w,j)} E_{v,i \to w,j}(\phi, \xi) \right\}, \quad (10)$$

where $E_{v,i \to w,j}(\phi,\xi)$ is the square root

$$E_{v,i \to w,j}(\phi,\xi) = \left(D^{*2}(\phi,\xi) + D^2_{\text{chi-square}}(\phi,\xi) + D^2_{\text{depth}}(\phi,\xi)\right)^{1/2}. \quad (11)$$

Note that the distance measures in equation (11) have a simplified notation.

The majority vote calculates the minimum differently by determining different superpixel refinement candidates with the specialized feature functional each:

$$\xi_\phi = F_{v,i \to w,j}(\phi) = \left\{\xi \mid \min_{SPS^*(w,j)} D_{\text{feature}}(\phi,\xi)\right\}. \quad (12)$$

Here the distance $D_{\text{feature}}$ represents equations (1), (4), (7), (8), and/or (9). Thereafter the superpixel receiving the most votes is selected for superpixel ID replacement. An exception is defined for the case that the majority finding fails. Here the Euclidean combination needs to force the decision.

A further modification of the majority vote solution is to use weighted votes. In the weighted majority vote, the outcome of the depth feature distance is counted twice to enlarge its influence on the decision making. Other weight combinations are possible as well.

In the following the functionality of the disclosed algorithm is shown by the following two examples.

The first example processes a static scene across two time instances $t_i$ and $t_j$. Because the scene is static all coincident views show the same images as depicted in Fig. 23. The sub-picture (a) sketches the three dimensional object shot with the multi-view camera field, and the sub-picture (b) depicts the resulting images for the nine views, which remain unchanged for the two handled time instance $t_1$ and $t_2$.

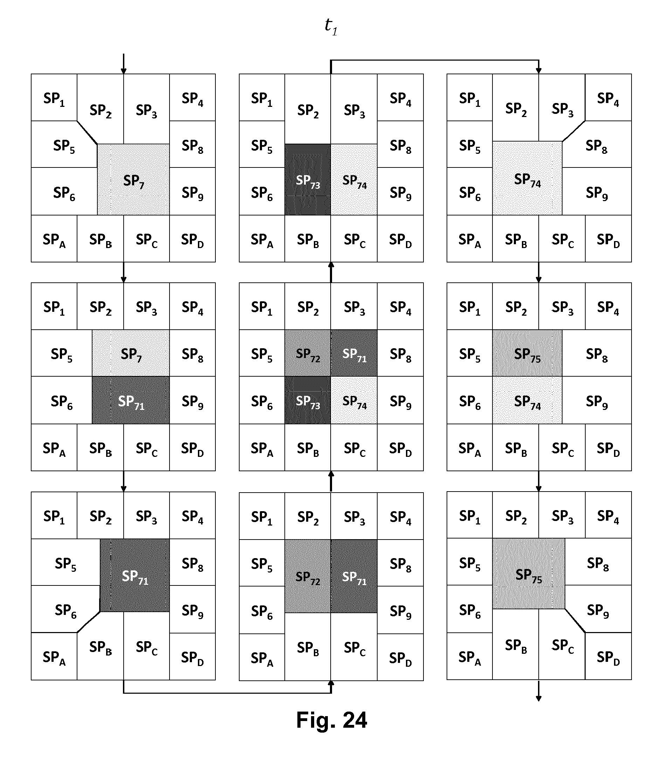

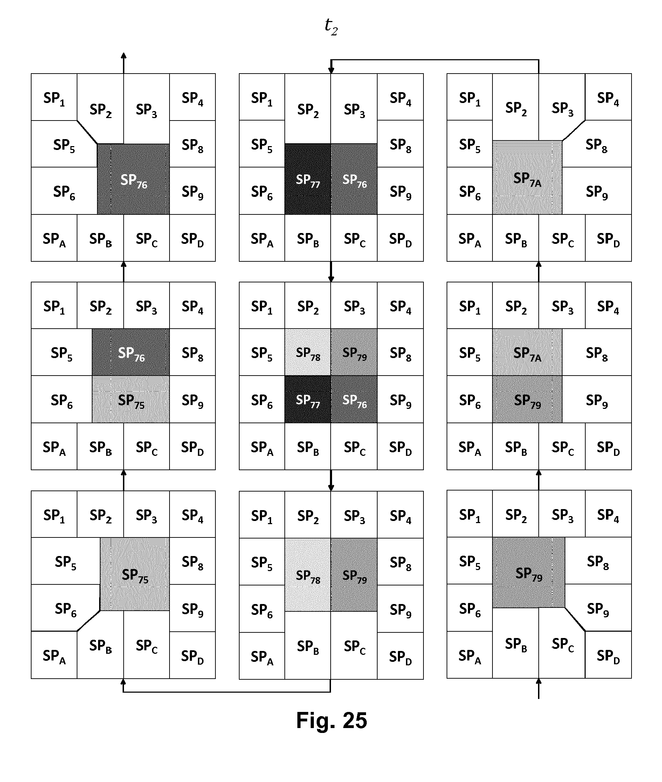

Fig. 24 and Fig. 25 show the intermediate superpixels generated with the TCS (e.g. [3]) applied after the serialization scan (step S1). The intermediate superpixel maps are temporally consistent in scan order and all changes in the superpixel IDs are indicated with different grey values. Fig. 24 contains examples for the splitting and the merging of superpixels appearing in the nine views C1.1 till C1.9, where the same numbering is used as explained in Fig. 8. For example, the superpixel $SP_7$ in view C1.1 is split and generates a new superpixel $SP_{71}$ in view C4.1. The contrary happens with the superpixels $SP_7$ and $SP_{71}$ in view C4.1. They are merged to the single superpixel $SP_{71}$ in view C7.1. The two possible types of changes, the disappearing as well as the new creation of IDs, have already been explained above.

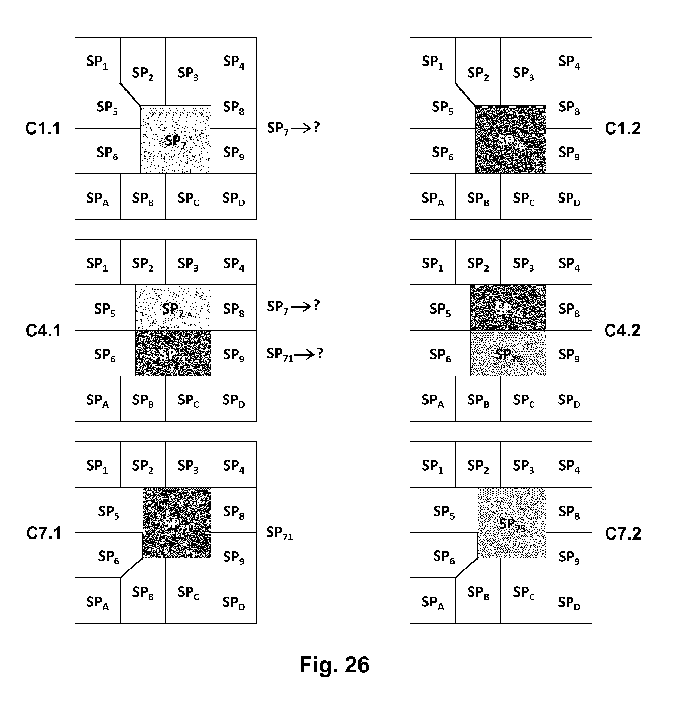

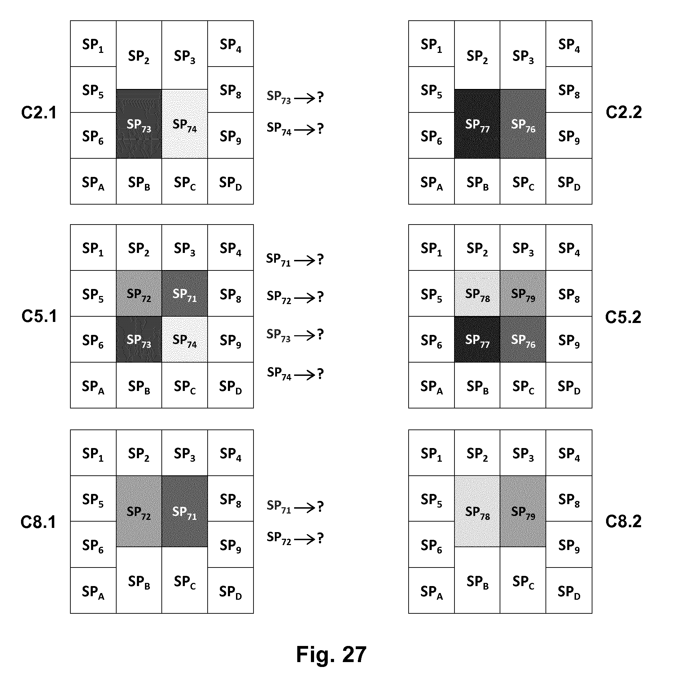

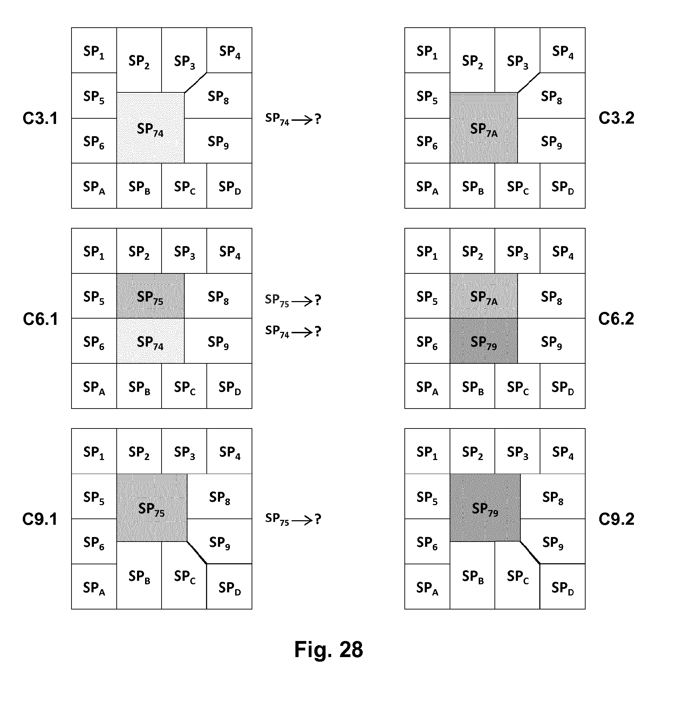

Figs. 26 to 28 depict the intermediate superpixel maps for a direct comparison of coincident views in both time instances (TSP). The static scene shown in this example makes it obvious that for each disappearing superpixel an appropriate new superpixel is created and the preservation of the temporal superpixel consistency is reached by applying the disclosed superpixel ID refinement (step S2).

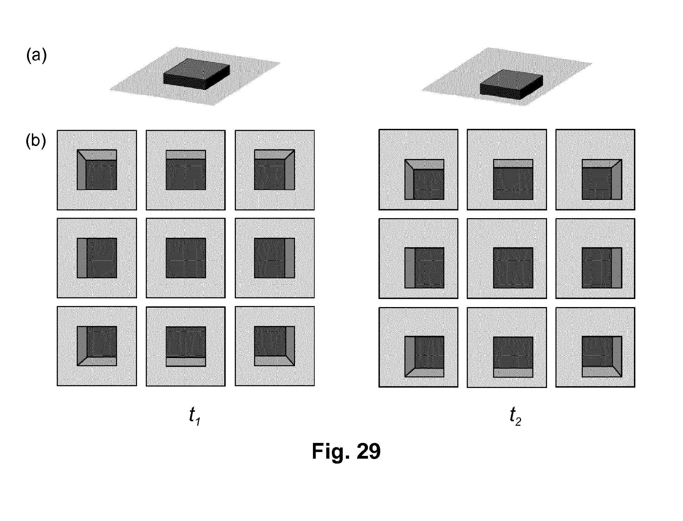

The second example processes a dynamic scene across two time instances $t_i$ and $t_j$ as depicted in Fig. 29. The sub-picture (a) sketches a three dimensional object shot with the multi-view camera field, and the sub-picture (b) depicts the resulting images for the views. As the object is moving in front of the cameras, the images for coincident views are different.

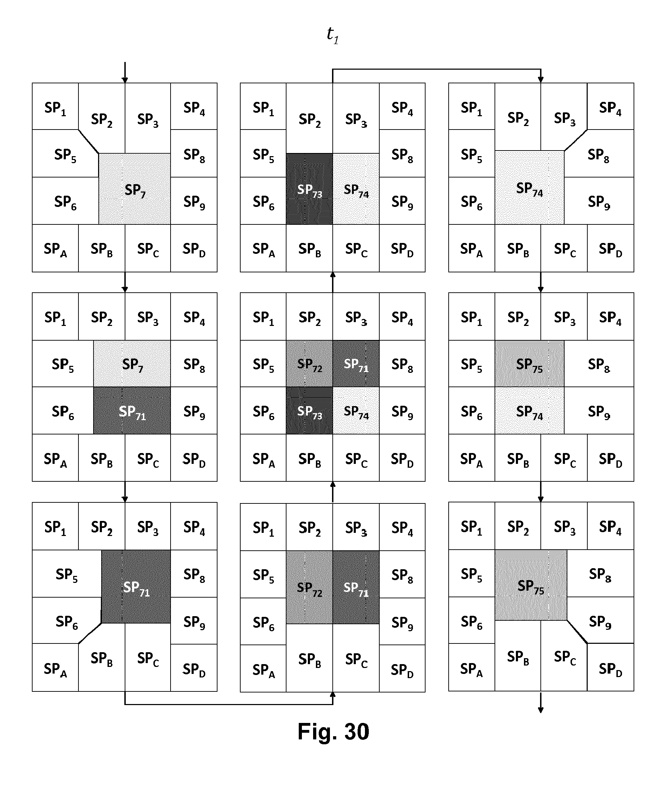

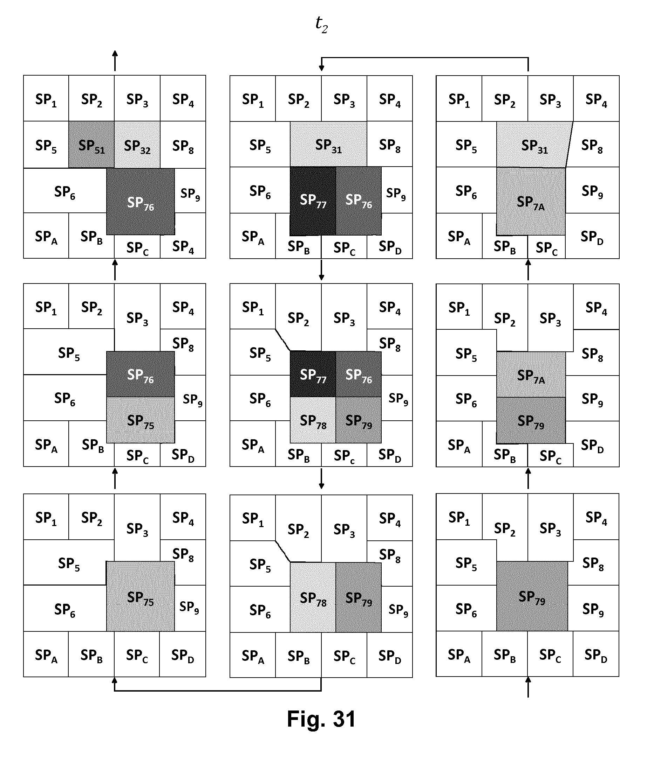

Fig. 30 and Fig. 31 depict the result of the disclosed algorithm showing the intermediate superpixels generated with a TCS applied after the serialization scan (step S1). Again all changes within the intermediate superpixel IDs are indicated with different grey values and view numbering is similar to Fig. 8. In the example of a dynamic scene more changes occur due to the moving object in the scene. For example, the superpixel $SP_{72}$ is generated in view C8.1 and does already disappear in view C2.1 (Fig. 30).

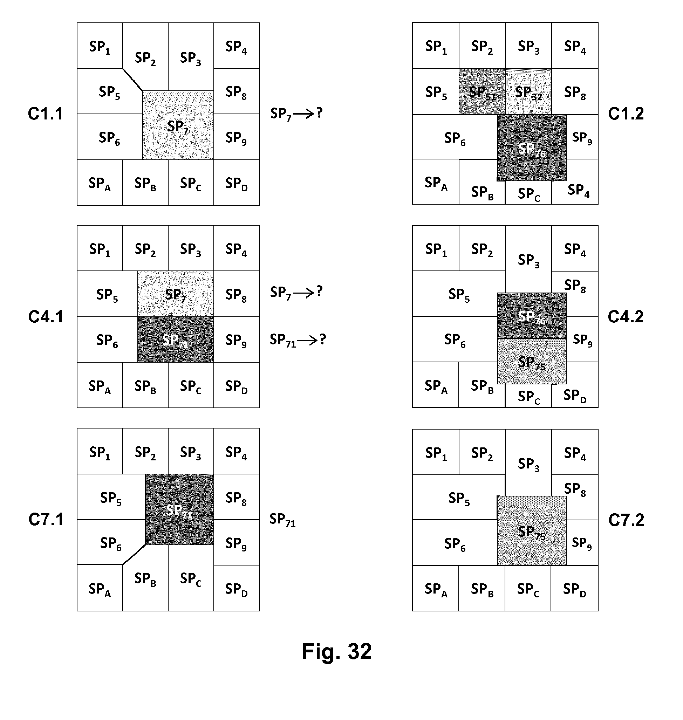

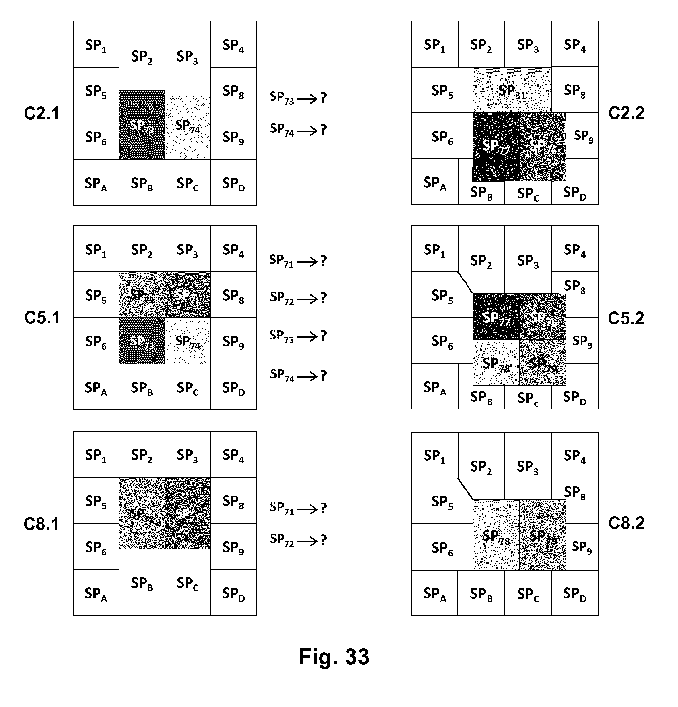

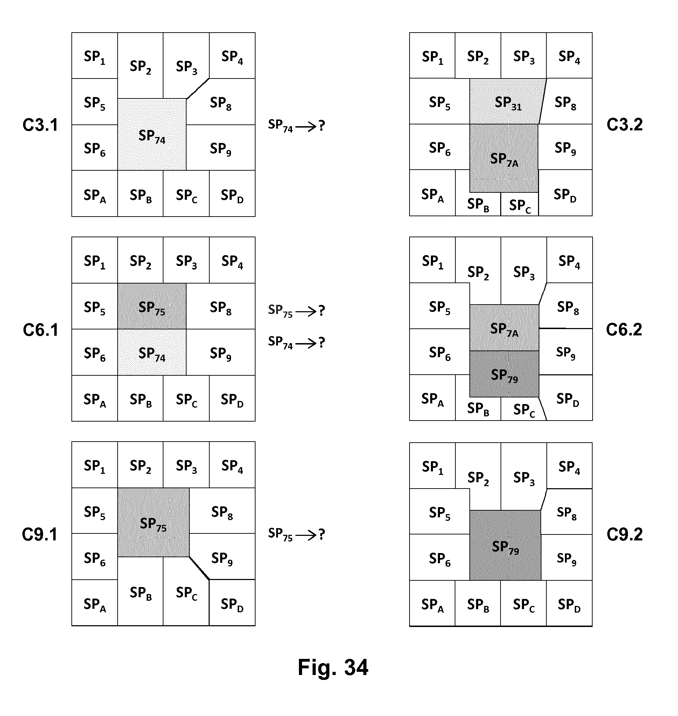

The superpixel maps depicted in Figs. 32 to 34 allow the visual comparison of coincident views in both time instances. It demonstrates how the described superpixel ID refinement (step S2) finds appropriate new superpixels for missing superpixel IDs. So in Fig. 32 C1.1 $SP_7$ is assigned to C1.2 $SP_{76}$, C4.1 $SP_7$ is assigned to C4.2 $SP_{76}$, C4.1 $SP_{71}$ is assigned to C4.2 $SP_{75}$, C7.1 $SP_{71}$ is assigned to C7.2 $SP_{75}$, and so on. Only some of the new appearing superpixels, as $SP_{31}$, $SP_{32}$, and $SP_{52}$, exist only for a short time and disappear later without finding a replacement. This, however, is not unusual and does also happen when generating temporally consistent superpixels using TCS algorithms for single view sequences. Therefore these cases at most cause a marginal loss in the quality for the resulting temporal and multi-view consistency.

**CITATIONS**

[1] X. Ren et al.: "Learning a classification model for segmentation", Proceedings of the Ninth IEEE International Conference on Computer Vision (ICCV '03) (2003), pp. 10-17.

[2] R. Achanta et al.: "SLIC superpixels compared to state-of-the-art superpixel methods", IEEE Transactions on Pattern Analysis and Machine Intelligence, Vol. 34 (2012), pp. 2274-2282.

[3] M. Reso et al.: "Temporally Consistent Superpixels", Proceedings of the 2013 IEEE International Conference on Computer Vision (ICCV '13), pp. 385-392

[4] B. Schiele et al.: "Object Recognition Using Multidimensional Receptive Field Histograms", Proceedings of the 4th European Conference on Computer Vision (ECCV '96), pp. 610-619.

[5] Y. Rubner et al.: "The Earth Mover's Distance as a Metric for Image Retrieval", International Journal of Computer Vision, Vol. 40 (2000), pp. 99-121.

**Claims**

1. A method for generating temporally consistent superpixels for a sequence of multi-view captures, each multi-view capture including at least two views, the method comprising:

   - generating (10) an ordered sequence of views forming a joined path from views of a first multi-view capture and views of a second multi-view capture, wherein the views of the second multi-view capture have an order which is a reverse of an order of the views of the first multi-view capture; and
   - generating (11) temporally consistent superpixels for the ordered sequence of views.

2. The method according to claim 1, wherein the first multi-view capture and the second multi-view capture are temporally successive multi-view captures.

3. The method according to claim 1 or 2, further comprising refining labels of superpixels generated for a view of the second multi-view capture using superpixels generated for a corresponding view of the first multi-view capture.

4. The method according to one of claims 1 to 3, further comprising refining labels of superpixels generated for a view of the second multi-view capture using superpixels generated for a neighboring view of the second multi-view capture.

5. The method according to claim 3 or 4, wherein at least one of a geometrical measure and a similarity measure is used for refining labels of superpixels.

6. The method according to claim 5, wherein the similarity measure comprises at least one of color information, depth information, and motion vectors.

7. A computer readable storage medium having stored therein instructions enabling generating temporally consistent superpixels for a sequence of multi-view captures, each multi-view capture including at least two views, which, when executed by a computer, cause the computer to:

   - generate (10) an ordered sequence of views forming a joined path from views of a first multi-view capture and views of a second multi-view capture, wherein the views of the second multi-view capture have an order which is a reverse of an order of the views of the first multi-view capture; and
   - generate (11) temporally consistent superpixels for the ordered sequence of views.

8. An apparatus (20) configured to generate temporally consistent superpixels for a sequence of multi-view captures, each multi-view capture at least two views, the apparatus (20) comprising:

   - a sequence generator (23) configured to generate (10) an ordered sequence of views forming a joined path from views of a first multi-view capture and views of a second multi-view capture, wherein the views of the second multi-view capture have an order which is a reverse of an order of the views of the first multi-view capture; and
   - a superpixel generator (24) configured to generate (11) temporally consistent superpixels for the ordered sequence of views.

9. An apparatus (30) configured to generate temporally consistent superpixels for a sequence of multi-view captures, each multi-view capture including at least two views, the apparatus (30) comprising a processing device (31) and a memory device (32) having stored therein instructions, which, when executed by the processing device (31), cause the apparatus (30) to:

- generate (10) an ordered sequence of views forming a joined path from views of a first multi-view capture and views of a second multi-view capture, wherein the views of the second multi-view capture have an order which is a reverse of an order of the views of the first multi-view capture; and
- generate (11) temporally consistent superpixels for the ordered sequence of views.

10

Generate ordered
sequence of views

11

Generate TCS for ordered
sequence of views

**Fig. 1**

23    24    20

21

22

25

**Fig. 2**

31    32    30

**Fig. 3**

(a) C0

(b) $t_1$ $t_2$ $t_3$ ...

(c) C1 C2 C3 C4 C5 C6 C7 C8 C9

(d) $t_1$ $t_2$ $t_3$ ...

**Fig. 4**

$t_1$ $t_2$ $t_3$

TCS

$t_1$ $t_2$ $t_3$

**Fig. 5**

TCS+MCS ?

Fig. 6

(a)

(b)

Fig. 7

C1.1 C2.1 C3.1    C1.2 C2.2 C3.2    C1.3 C2.3 C3.3

C4.1 C5.1 C6.1    C4.2 C5.2 C6.2    C4.3 C5.3 C6.3

C7.1 C8.1 C9.1    C7.2 C8.2 C9.2    C7.3 C8.3 C9.3

$t_1$              $t_2$              $t_3$

**Fig. 8**

(a)

Images → Multi-view serialization (40) → TCS algorithm (41) → Superpixels

(b)

→ Multi-view serialization (40) → TCS algorithm (41) → Superpixel ID refinement TSP (42) →

(c)

→ Multi-view serialization (40) → TCS algorithm (41) → Superpixel ID refinement MSP (43) → Superpixel ID refinement TSP (42) →

S1          S2

**Fig. 9**

(a)

C1.1 C2.1 C3.1
C4.1 C5.1 C6.1
C7.1 C8.1 C9.1

C1.2 C2.2 C3.2
C4.2 C5.2 C6.2
C7.2 C8.2 C9.2

C1.3 C2.3 C3.3
C4.3 C5.3 C6.3
C7.3 C8.3 C9.3

(b)

C1.1 C2.1 C3.1
C4.1 C5.1 C6.1
C7.1 C8.1 C9.1

C1.2 C2.2 C3.2
C4.2 C5.2 C6.2
C7.2 C8.2 C9.2

C1.3 C2.3 C3.3
C4.3 C5.3 C6.3
C7.3 C8.3 C9.3

$t_1$ $t_2$ $t_3$

**Fig. 10**

(a)

C1.1 C2.1 C3.1
C4.1 C5.1 C6.1
C7.1 C8.1 C9.1

C1.2 C2.2 C3.2
C4.2 C5.2 C6.2
C7.2 C8.2 C9.2

C1.3 C2.3 C3.3
C4.3 C5.3 C6.3
C7.3 C8.3 C9.3

(b)

C1.1 C2.1 C3.1
C4.1 C5.1 C6.1
C7.1 C8.1 C9.1

C1.2 C2.2 C3.2
C4.2 C5.2 C6.2
C7.2 C8.2 C9.2

C1.3 C2.3 C3.3
C4.3 C5.3 C6.3
C7.3 C8.3 C9.3

$t_1$ $t_2$ $t_3$

**Fig. 11**

(a)

| C1.1 | C2.1 | C3.1 |
| C4.1 | C5.1 | C6.1 |
| C7.1 | C8.1 | C9.1 |

| C1.2 | C2.2 | C3.2 |
| C4.2 | C5.2 | C6.2 |
| C7.2 | C8.2 | C9.2 |

| C1.3 | C2.3 | C3.3 |
| C4.3 | C5.3 | C6.3 |
| C7.3 | C8.3 | C9.3 |

(b)

| C1.1 | C2.1 | C3.1 |
| C4.1 | C5.1 | C6.1 |
| C7.1 | C8.1 | C9.1 |

| C1.2 | C2.2 | C3.2 |
| C4.2 | C5.2 | C6.2 |
| C7.2 | C8.2 | C9.2 |

| C1.3 | C2.3 | C3.3 |
| C4.3 | C5.3 | C6.3 |
| C7.3 | C8.3 | C9.3 |

$t_1$ $t_2$ $t_3$

**Fig. 12**

(a)

| C1.1 | C2.1 | C3.1 |
| C4.1 | C5.1 | C6.1 |
| C7.1 | C8.1 | C9.1 |

| C1.2 | C2.2 | C3.2 |
| C4.2 | C5.2 | C6.2 |
| C7.2 | C8.2 | C9.2 |

| C1.3 | C2.3 | C3.3 |
| C4.3 | C5.3 | C6.3 |
| C7.3 | C8.3 | C9.3 |

(b)

| C1.1 | C2.1 | C3.1 |
| C4.1 | C5.1 | C6.1 |
| C7.1 | C8.1 | C9.1 |

| C1.2 | C2.2 | C3.2 |
| C4.2 | C5.2 | C6.2 |
| C7.2 | C8.2 | C9.2 |

| C1.3 | C2.3 | C3.3 |
| C4.3 | C5.3 | C6.3 |
| C7.3 | C8.3 | C9.3 |

$t_1$ $t_2$ $t_3$

**Fig. 13**

(a)

| C1.1 | C2.1 | C3.1 |
| C4.1 | C5.1 | C6.1 |
| C7.1 | C8.1 | C9.1 |

| C1.2 | C2.2 | C3.2 |
| C4.2 | C5.2 | C6.2 |
| C7.2 | C8.2 | C9.2 |

| C1.3 | C2.3 | C3.3 |
| C4.3 | C5.3 | C6.3 |
| C7.3 | C8.3 | C9.3 |

(b)

| C1.1 | C2.1 | C3.1 |
| C4.1 | C5.1 | C6.1 |
| C7.1 | C8.1 | C9.1 |

| C1.2 | C2.2 | C3.2 |
| C4.2 | C5.2 | C6.2 |
| C7.2 | C8.2 | C9.2 |

| C1.3 | C2.3 | C3.3 |
| C4.3 | C5.3 | C6.3 |
| C7.3 | C8.3 | C9.3 |

$t_1$ $t_2$ $t_3$

**Fig. 14**

(a)

| C1.1 | C2.1 | C3.1 |
| C4.1 | C5.1 | C6.1 |
| C7.1 | C8.1 | C9.1 |

| C1.2 | C2.2 | C3.2 |
| C4.2 | C5.2 | C6.2 |
| C7.2 | C8.2 | C9.2 |

| C1.3 | C2.3 | C3.3 |
| C4.3 | C5.3 | C6.3 |
| C7.3 | C8.3 | C9.3 |

(b)

| C1.1 | C2.1 | C3.1 |
| C4.1 | C5.1 | C6.1 |
| C7.1 | C8.1 | C9.1 |

| C1.2 | C2.2 | C3.2 |
| C4.2 | C5.2 | C6.2 |
| C7.2 | C8.2 | C9.2 |

| C1.3 | C2.3 | C3.3 |
| C4.3 | C5.3 | C6.3 |
| C7.3 | C8.3 | C9.3 |

$t_1$ $t_2$ $t_3$

**Fig. 15**

(a)

| | | | | | | | | | | | |
|---|---|---|---|---|---|---|---|---|---|---|---|
| C1.1 | C2.1 | C3.1 | | C1.2 | C2.2 | C3.2 | | C1.3 | C2.3 | C3.3 |
| C4.1 | C5.1 | C6.1 | | C4.2 | C5.2 | C6.2 | | C4.3 | C5.3 | C6.3 |
| C7.1 | C8.1 | C9.1 | | C7.2 | C8.2 | C9.2 | | C7.3 | C8.3 | C9.3 |

(b)

| | | | | | | | | | | | |
|---|---|---|---|---|---|---|---|---|---|---|---|
| C1.1 | C2.1 | C3.1 | | C1.2 | C2.2 | C3.2 | | C1.3 | C2.3 | C3.3 |
| C4.1 | C5.1 | C6.1 | | C4.2 | C5.2 | C6.2 | | C4.3 | C5.3 | C6.3 |
| C7.1 | C8.1 | C9.1 | | C7.2 | C8.2 | C9.2 | | C7.3 | C8.3 | C9.3 |

$t_1$ $t_2$ $t_3$

**Fig. 16**

(a)

| | | | | | | | | | | | |
|---|---|---|---|---|---|---|---|---|---|---|---|
| C1.1 | C2.1 | C3.1 | | C1.2 | C2.2 | C3.2 | | C1.3 | C2.3 | C3.3 |
| C4.1 | C5.1 | C6.1 | | C4.2 | C5.2 | C6.2 | | C4.3 | C5.3 | C6.3 |
| C7.1 | C8.1 | C9.1 | | C7.2 | C8.2 | C9.2 | | C7.3 | C8.3 | C9.3 |

(b)

| | | | | | | | | | | | |
|---|---|---|---|---|---|---|---|---|---|---|---|
| C1.1 | C2.1 | C3.1 | | C1.2 | C2.2 | C3.2 | | C1.3 | C2.3 | C3.3 |
| C4.1 | C5.1 | C6.1 | | C4.2 | C5.2 | C6.2 | | C4.3 | C5.3 | C6.3 |
| C7.1 | C8.1 | C9.1 | | C7.2 | C8.2 | C9.2 | | C7.3 | C8.3 | C9.3 |

$t_1$ $t_2$ $t_3$

**Fig. 17**

(a)

| | | |
|---|---|---|
| C1.1 | C2.1 | C3.1 |
| C4.1 | C5.1 | C6.1 |
| C7.1 | C8.1 | C9.1 |

| | | |
|---|---|---|
| C1.2 | C2.2 | C3.2 |
| C4.2 | C5.2 | C6.2 |
| C7.2 | C8.2 | C9.2 |

| | | |
|---|---|---|
| C1.3 | C2.3 | C3.3 |
| C4.3 | C5.3 | C6.3 |
| C7.3 | C8.3 | C9.3 |

(b)

| | | |
|---|---|---|
| C1.1 | C2.1 | C3.1 |
| C4.1 | C5.1 | C6.1 |
| C7.1 | C8.1 | C9.1 |

| | | |
|---|---|---|
| C1.2 | C2.2 | C3.2 |
| C4.2 | C5.2 | C6.2 |
| C7.2 | C8.2 | C9.2 |

| | | |
|---|---|---|
| C1.3 | C2.3 | C3.3 |
| C4.3 | C5.3 | C6.3 |
| C7.3 | C8.3 | C9.3 |

$t_1$ $t_2$ $t_3$

**Fig. 18**

(a)

| | | |
|---|---|---|
| C1.1 | C2.1 | C3.1 |
| C4.1 | C5.1 | C6.1 |
| C7.1 | C8.1 | C9.1 |

| | | |
|---|---|---|
| C1.2 | C2.2 | C3.2 |
| C4.2 | C5.2 | C6.2 |
| C7.2 | C8.2 | C9.2 |

| | | |
|---|---|---|
| C1.3 | C2.3 | C3.3 |
| C4.3 | C5.3 | C6.3 |
| C7.3 | C8.3 | C9.3 |

(b)

| | | |
|---|---|---|
| C1.1 | C2.1 | C3.1 |
| C4.1 | C5.1 | C6.1 |
| C7.1 | C8.1 | C9.1 |

| | | |
|---|---|---|
| C1.2 | C2.2 | C3.2 |
| C4.2 | C5.2 | C6.2 |
| C7.2 | C8.2 | C9.2 |

| | | |
|---|---|---|
| C1.3 | C2.3 | C3.3 |
| C4.3 | C5.3 | C6.3 |
| C7.3 | C8.3 | C9.3 |

$t_1$ $t_2$ $t_3$

**Fig. 19**

Fig. 20

Fig. 21

$c=v$                      $c=w$

$D_{min}$

$SP_{v,i}(\phi)$                    $SP_{w,j}(\xi_{\phi})$

$t=i$                      $t=j$

**Fig. 22**

(a)

(b)

$t_1=t_2$

**Fig. 23**

Fig. 24

$t_2$

# Fig. 25

EP 3 043 316 A1

Fig. 26

26

**Fig. 27**

Fig. 28

(a)

(b)

$t_1$

$t_2$

**Fig. 29**

$t_1$

Fig. 30

$t_2$

# Fig. 31

Fig. 32

**Fig. 33**

EP 3 043 316 A1

Fig. 34

34

Europäisches
Patentamt

European
Patent Office

Office européen
des brevets

# EUROPEAN SEARCH REPORT

**Application Number**

EP 15 30 5013

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | VOGEL CHRISTOPH ET AL: "Piecewise Rigid Scene Flow", 2013 IEEE INTERNATIONAL CONFERENCE ON COMPUTER VISION, IEEE, 1 December 2013 (2013-12-01), pages 1377-1384, XP032573039, ISSN: 1550-5499, DOI: 10.1109/ICCV.2013.174 [retrieved on 2014-02-28] * abstract * * sections 1, 3, 3.1-3.4 * * figure 2 * | 1-9 | INV. G06T7/00 |
| A | WO 2014/135400 A1 (SONY CORP [JP]; SONY DEUTSCHLAND GMBH [DE]) 12 September 2014 (2014-09-12) * abstract * * paragraph [0018] * * figures 1, 4 * | 1-9 | |
| A,D | RESO MATTHIAS ET AL: "Temporally Consistent Superpixels", 2013 IEEE INTERNATIONAL CONFERENCE ON COMPUTER VISION, IEEE, 1 December 2013 (2013-12-01), pages 385-392, XP032572909, ISSN: 1550-5499, DOI: 10.1109/ICCV.2013.55 [retrieved on 2014-02-28] * abstract * * section 4 * | 1-9 | TECHNICAL FIELDS SEARCHED (IPC) G06T H04N |

The present search report has been drawn up for all claims

| Place of search | Date of completion of the search | Examiner |
|---|---|---|
| Munich | 9 July 2015 | Engels, Angela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 5013

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2015

| Patent document cited in search report | Publication date | Patent family member(s) | Publication date |
|---|---|---|---|
| WO 2014135400 A1 | 12-09-2014 | NONE | |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **X. REN et al.** Learning a classification model for segmentation''. *Proceedings of the Ninth IEEE International Conference on Computer Vision,* 2003, 10-17
- **R. ACHANTA et al.** SLIC superpixels compared to state-of-the-art superpixel methods. *IEEE Transactions on Pattern Analysis and Machine Intelligence,* 2012, vol. 34, 2274-2282
- **M. RESO et al.** Temporally Consistent Superpixels. *Proceedings of the 2013 IEEE International Conference on Computer Vision,* 2013, 385-392
- **B. SCHIELE et al.** Object Recognition Using Multidimensional Receptive Field Histograms. *Proceedings of the 4th European Conference on Computer Vision,* 1996, 610-619
- **Y. RUBNER et al.** The Earth Mover's Distance as a Metric for Image Retrieval. *International Journal of Computer Vision,* 2000, vol. 40, 99-121